# EUROPEAN PATENT SPECIFICATION

(11) **EP 3 988 357 B1**
(45) Date of publication and mention of the grant of the patent: **04.12.2024**
(21) Application number: 20203951.7
(22) Date of filing: 26.10.2020
(51) Int. Cl.: B60J 3/04, G02B 27/28, G01S 17/931

(54) **ROOF MOUNTABLE SENSOR SYSTEM**
DACHMONTIERBARES SENSORSYSTEM
SYSTÈME DE CAPTEUR POUVANT ÊTRE MONTÉ SUR UN TOIT

(43) Date of publication of application: 27.04.2022
(73) Proprietor: Inalfa Roof Systems Group B.V., 5807 GW Oostrum (NL)
(72) Inventor: Schwepper, Gerrit, 45475 Kamp-Lintfort (DE)
(74) Representative: De Vries & Metman

(56) References cited:
- WO-A1-2019/167351
- DE-A1- 102016 012 341
- US-A1- 2017 369 106
- US-A1- 2020 016 963
- US-A1- 2020 101 905

## Description

The invention relates to a roof assembly and a sensor system for use therein for detecting an intensity and direction of incident light.

In a known vehicle, one or more sensors for detecting a position of the sun relative to the vehicle are provided for operating a dimmable wind shield to prevent glare. Light-intensity sensors are known for controlling an HVAC system in response to radiative energy supplied by the light.

The known sensors are commonly arranged at or near the wind shield or side windows, depending on the intended function. In particular for preventing glare, the known sensor is arranged at the wind shield to accurately determine a direction of the excessive-light source, usually the sun, relative to the eyes of the driver. Moreover, only a part of the surroundings in front of the vehicle needs to be in a field of detection as a sun position rearward of the vehicle will never blind the driver.

For HVAC control, the position of the sensor is less critical and may be provided at many positions without requiring high positional and orientational accuracy. In a known embodiment, the sensors are configured to determine a main direction from which any light is mainly incident to be able to differentiate in air cooling and heating in different HVAC zones in the vehicle. Also in such embodiment, high accuracy is not required.

In recent years, vehicles have been provided with more and more sensors. In particular, autonomous driving capabilities have been introduced, requiring highly accurate and reliable sensor systems. Many of such sensor systems use electromagnetic radiation, either in a visible part of the electromagnetic spectrum or in an invisible part, like infrared or UV. Such sensor system may be sensitive to an excessive amount of exterior light, like sun light. Further, such sensor systems are not limited in their field of detection and thus may be configured to detect an external condition in any direction relative to the vehicle.

It is desirable to provide a roof assembly and a sensor system for use therein for detecting an intensity and direction of incident light suitable for multiple purposes, including for detecting potential interference of an excessive amount of exterior light with autonomous driving sensors.

A roof assembly for a vehicle comprising a roof mountable sensor system in accordance with the preamble of the main claim is known from DE 10 2016 012 341 A1.

In a first aspect, a roof assembly in accordance with the main claim is provided. The sensor system of the roof assembly is configured to be mounted on a roof of a vehicle and the sensor system comprises a sensor unit. The sensor unit comprises an omnidirectional incident-light detector for detecting an incident-light intensity and an associated light-source position relative to the vehicle.

At the roof level, an incident-light sensor system is enabled to have a larger, omnidirectional field of detection. As a result, an output of the sensor system may be used for many different purposes, including but not limited to controlling a dimmable wind shield, controlling an HVAC system or adapting an output of another sensor system like an autonomous driving sensor.

As used herein, an omnidirectional field of detection is intended to refer to about a half sphere around the sensor unit. The sensor unit is thus configured to detect any position of at least the sun relative to the vehicle on the roof of which the sensor unit may be mounted. Depending on vehicle shape and vehicle dimensions and depending on sensor unit configuration and sensor unit design, the field of detection may a bit more or a bit less than a half sphere. Essentially, the sensor unit is configured to have a field of detection all around the vehicle.

Many incident-light detection systems are known in the prior art, including omnidirectional sensor units. A person skilled in the art is considered to be able to select a suitable sensor unit within the scope of the present invention. The selection may take into account vehicle design aspects, functional aspects and properties, including accuracy and reliability, weatherability, cost-effectiveness and many other considerations.

Aforementioned other sensor system may be integrated with the above-described sensor system. So, in an embodiment of the roof assembly, the sensor system comprises a first sensor unit and a second sensor unit. The first sensor unit comprises the omnidirectional incident-light detector and the second sensor unit is configured to detect an exterior condition, wherein an output of the second sensor unit is compensated for incident light as detected by the first sensor unit. For example, the second sensor unit may comprise a camera and in response to an output of the first sensor unit optical settings of the camera may be adapted such that glare by the incident light does not interfere with the autonomous driving function. Instead of adapting optical settings, a digital image obtained from such camera may be digitally processed to reduce any glare or overexposure-related artefacts. If no such compensation is available, e.g. for another type of sensor, the output of the first sensor unit can otherwise be used to ignore the output of the second sensor unit, if it is determined that an excessive amount of exterior light might affect reliability or accuracy of the output of the second sensor unit.

In an embodiment of the roof assembly, the sensor unit comprises a first light-sensitive subunit and a second light-sensitive subunit. The first and the second light-sensitive subunits are spaced apart and in different orientations such to be configured to detect incident light from different light-source positions. The sensor unit as used in the roof assembly may be embodied as a single unit or may be embodied in a number of subunits. For example, a subunit may be arranged at two or more edges or corners of a vehicle roof, wherein each subunit is oriented to have a dedicated field of detection to detect light incident from a predetermined part of the combined field of detection. Combining outputs from the number of subunits provides the sensor unit output corresponding to an omnidirectional field of detection.

In an embodiment of the roof assembly, the sensor unit is arranged at a highest location of the roof, when mounted on the vehicle. At the highest location of the roof, it may be expected that a maximum size of the field of detection is obtainable as a minimum number of objects may interfere in the field of detection.

In an embodiment, the transparent panel comprises a first section and a second section. The transparent panel comprises an omnidirectional sensor unit at the roof, the sensor unit is enabled to not only control a (locally) dimmable front wind shield, but is also enabled to control any dimmable side windows and a dimmable roof window.

In an embodiment, at a location where light passes through the transparent panel to the sensor unit, the transparent panel is provided with predetermined optical properties for adapting incident light rays to the sensor unit. The transparent panel may be shaped like a lens, or the like, or may be provided with any optical elements, like a lens, a Fresnel lens or a reflective element. Such shape or elements may be arranged at the interior surface or at the exterior surface, depending on the function. Such an optical system may assist in shaping the exterior light to be suitably projected on a light-sensitive element, e.g. a photo-detector that based on incident light changes its electrical properties, like its resistance or its output voltage or current.

In an embodiment, the sensor unit is moveably arranged and the sensor system comprises a control unit, wherein the control unit is configured to move the sensor unit. To increase a field of detection or to increase detection accuracy, for example, the sensor unit may be partially or completely moveable. The movement may be provided to adjust an orientation of the sensor unit. So, in a particular embodiment, the sensor unit may detect a strong light source and may then be moved to be oriented towards such light source in order to more accurately determine a light intensity, a position of the light source and may be even a size of the light source, for example. It is apparent to those skilled in the art that such a moveably arranged sensor unit may also be employed at any other position in the vehicle, other than the position at the roof.

Other embodiments may combine aspects of the above-mentioned embodiments.

In an aspect, a roof assembly for a vehicle is provided. The roof assembly comprises the roof mountable sensor system as above described. In a particular embodiment thereof, the roof assembly may comprise a moveable panel or closure member that may be selectively arranged over a roof opening. Additionally or alternatively, the roof assembly may comprise the transparent panel to allow ambient, exterior light like sun light to enter the passenger compartment of the vehicle.

In a particular embodiment, the sensor unit is mounted at the interior surface of the moveably arranged transparent panel and an output of the sensor unit is compensated for change in orientation of the sensor unit, when moved with the transparent pane. A moveably arranged closure member, comprising the transparent panel and the sensor unit, when moving to uncover or cover the roof opening in the vehicle roof, may slightly change its orientation relative to the remainder of the vehicle. Such change in orientation may significantly affect the output of the sensor unit due to a different angle of incidence of the exterior light. The change in orientation may be predetermined and the output may be compensated or corrected based on such predetermined change in orientation relative to the remainder of the vehicle. Optionally, the change in orientation may be determined *in situ* using a sensor like a gyroscopic sensor, for example, and the output of the sensor unit may then be corrected or compensated based on such detected change in orientation.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention as defined in the appended claims will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2A: shows a perspective view of a vehicle comprising a first embodiment of a roof mountable sensor system;
- Fig. 2B: shows a side view of the vehicle of Fig. 2A illustrating a field of detection of the roof mountable sensor system;
- Fig. 2C: shows a top view of the vehicle of Fig. 2A illustrating the field of detection of the roof mountable sensor system;
- Fig. 2D: shows a top view of a vehicle comprising a second embodiment of the roof mountable sensor system;
- Fig. 3A: shows a top view of a first embodiment of a sensor unit for use in the roof mountable sensor system;
- Fig. 3B: shows a cross-sectional view of the first embodiment of the sensor unit of Fig. 3A;
- Fig. 3C: shows a cross-sectional view of a second embodiment of a sensor unit for use in the roof mountable sensor system;
- Fig. 3D: shows a cross-sectional view of a third embodiment of a sensor unit for use in the roof mountable sensor system;
- Fig. 3E: shows a cross-sectional view of a fourth embodiment of a sensor unit for use in the roof mountable sensor system;
- Fig. 3F: shows a cross-sectional view of a fifth embodiment of a sensor unit for use in the roof mountable sensor system;
- Fig. 4: shows a top view of a vehicle comprising a third embodiment of the roof mountable sensor system;
- Fig. 5: shows a perspective view of the vehicle of Fig. 2A comprising a fourth embodiment of the roof mountable sensor system; and
- Fig. 6: shows a side view of a vehicle comprising a fifth embodiment of the roof mountable sensor system.

The present invention will now be described with reference to the accompanying drawings, wherein the same reference numerals have been used to identify the same or similar elements throughout the several views.

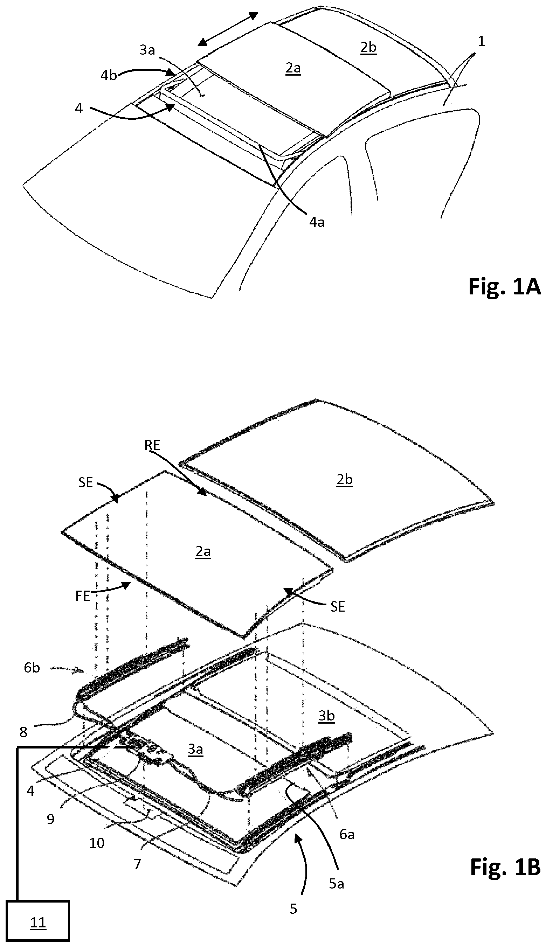

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly, having a middle beam 12 of the frame 5 between the openings 3a, 3b. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and an electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control module 11 is schematically illustrated and is operatively coupled to the electric motor 9. The control module 11 may be any kind of processing module, either a software controlled processing module or a dedicated processing module, like an ASIC, which are both well known to those skilled in the art. The control module 11 may be a stand-alone control module or it may be operatively connected to another control module, like a multipurpose, generic vehicle control module. In yet another embodiment, the control module 11 may be embedded in or be part of such a generic vehicle control module. Essentially, the control module 11 may be embodied by any control module suitable for, capable of and configured for performing operation of the electric motor 9 and thus the moveable roof assembly.

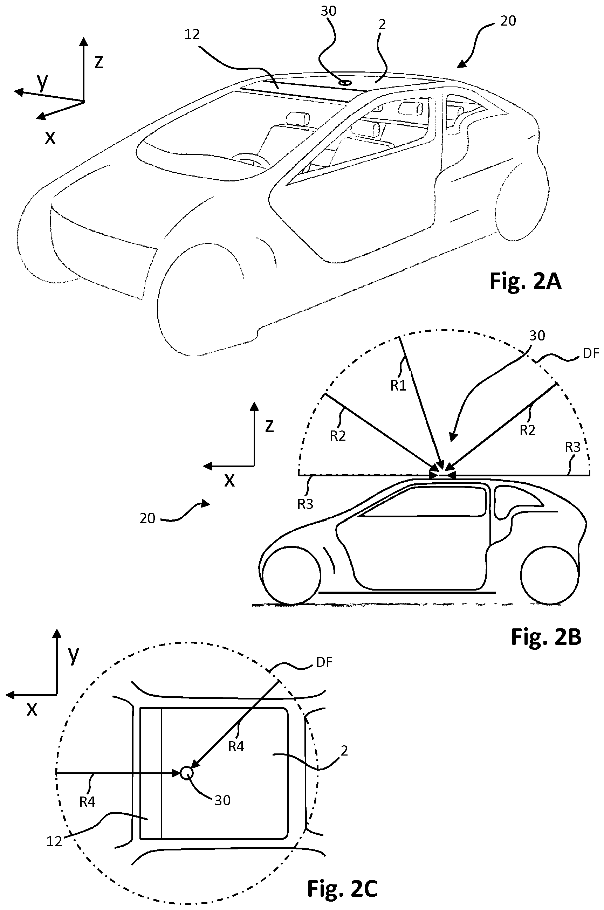

Fig. 2A shows an exemplary vehicle 20 comprising a roof panel, which may or may not be transparent, and an optional front header panel 12. The roof panel 2 is provided with a sensor system 30. The sensor system 30 is mounted on the vehicle roof and is configured to detect an intensity of exterior light and a direction of a light source, in particular in case the light source generates an excessive amount of light that may blind a driver or another sensor system, for example.

Fig. 2B shows the vehicle 20 comprising the sensor system 30 in an X-Z plane. The sensor system 30 has a field of detection DF, i.e. a field from which exterior light, like sun light, may be detected. The field of detection DF is essentially limited by the shape of the vehicle 20. By mounting the sensor system 30 at the vehicle roof, it is enabled to have a large field of detection DF. Thus, the field of detection DF has a shape of a half circle in the X-Z plane.

By providing an omnidirectional sensor system 30, it is enabled to detect a position of a light source at substantially any angle relative to the vehicle 20 as illustrated. Rays of light R1, R2, R3 under different angles of incidence in the X-Z plane are detectable by the sensor system 30.

Fig. 2C shows the vehicle 20 comprising the sensor system 30 in an X-Y plane. The sensor system 30 has the field of detection DF, which corresponds to a full circle in the X-Y plane, enabling to detect rays of light R4 from any angle of incidence in the X-Y plane. Combined with the half circle field of detection DF in the X-Z plane as illustrated in Fig. 2B, the field of detection DF is formed as a half sphere. Of course, in particular in the X-Z plane, the exact positioning of the sensor system 30 and the shape of the vehicle 20 and any objects mounted thereon determines whether the field of detection DF is a complete half sphere or is a little more or a little less than a half sphere.

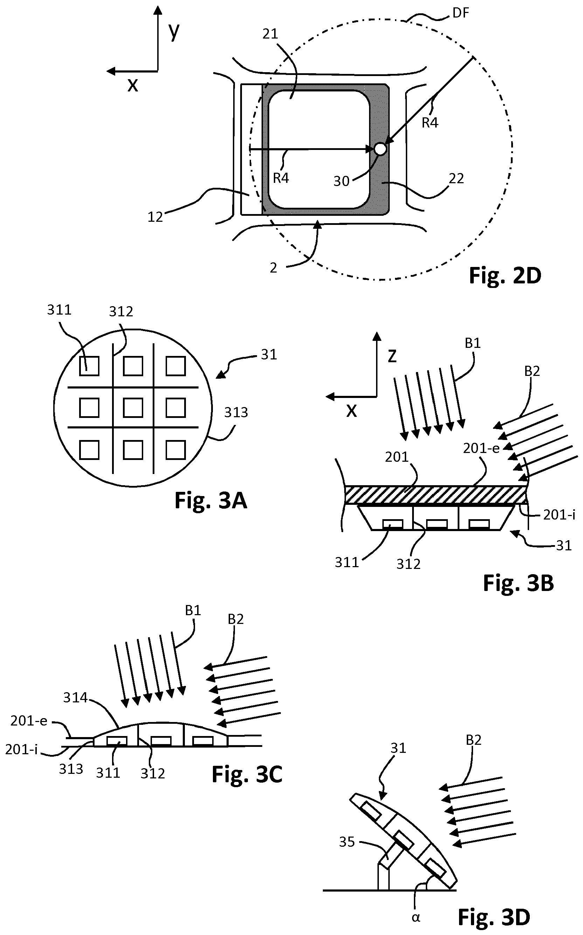

Fig. 2D shows an embodiment of the sensor system 30 mounted on and integrated in the roof of a vehicle comprising a roof panel 2 and in particular a transparent panel 2. The transparent panel 2 comprises a first section 21 and a second section 22.

The first section 21 is transparent and exterior light is enabled to pass through the transparent panel 2 into a passenger compartment of the vehicle.

The second section 22 is covered, usually but not necessarily at an interior side of the transparent roof panel 2. Exterior light is blocked and cannot pass through the second section 22 to reach the passenger compartment. For example, an obscuration band formed with a coating, or the like, may be arranged on the roof panel 2 in the second section 22. Alternatively or additionally, a headliner may be mounted at the interior side of the transparent roof panel 2. In any case, a passenger in the passenger compartment cannot look through the second section 22 to the surroundings or sky. It may be preferred to mount the sensor system 30 in such a section, preventing a view on the sensor system 30. In the embodiment of Fig. 2D, the sensor system 30 is indeed mounted in the second section 22.

Figs. 3A - 3F show a number of embodiments of an omnidirectional light detecting sensor unit 31 for use in the sensor system 30. Figs. 3A and 3B illustrate a first embodiment, wherein the sensor unit 31 comprises a number of light-sensitive elements 311 arranged in a 3 by 3 pattern and light-blocking or light-filtering separators 312 arranged between the light-sensitive elements 311. The light-sensitive elements 311 and the separators 312 are arranged in an optional housing 313.

The sensor unit 31 may be mounted on a transparent panel, e.g. a glass plate 201 having an interior surface 201-i which is directed towards an interior of the vehicle and having an exterior surface 201-e, which is opposite the interior surface 201-i. The exterior surface 201-e does not necessarily form an exterior surface of the vehicle, although it may be preferred to have the exterior surface 201-e forming the exterior surface of the vehicle in order to have a large field of detection.

Due to the separators 312, an amount of light detected by each light-sensitive element 311 is dependent on the angle of incidence of the light. For example, a first bundle of light rays B1 will result in a similar amount of light impinging on all light sensitive elements 311, while a second bundle of rays B2, at a different angle of incidence than the first bundle of rays B1, will not only impinge on the light sensitive elements 311 but also on the separators 312. As a result, the light-sensitive element 311 at a side from which the second bundle of rays B2 is coming will receive significantly more light than the other light-sensitive elements 311. By comparison of an electrical output of each light-sensitive element 311, it is enabled to detect a position of the light source from which the light rays originate and an overall light intensity can be determined.

Fig. 3C illustrates a second embodiment, wherein the sensor unit 31 is arranged in a hole in the transparent panel 2. The sensor unit 31 is provided with a curved top surface 314 to enable light rays coming from aside to enter the sensor unit 31, thus improving the field of detection.

The curved top surface 314 may additionally have a varying thickness to form a lens, for example. Such a lens may be advantageous to further improve sensitivity to light to increase an accuracy or to further increase a field of detection.

Fig. 3D schematically illustrates a third embodiment, wherein the sensor unit 31 is moveably arranged on a hingable support 35. The hingeable support 35 may be operatively coupled to a control unit (not shown) for moving the sensor unit 31. For example, based on the light as detected, the sensor unit 31 may be moved into an orientation or to a position in which a smaller angle of incidence between a bundle of light rays B2 and the sensor unit 31 is achieved. An angle α between the sensor unit 31 and a plane of the vehicle roof, for example, is then taken into account to determine a position of a light source from which the bundle of light rays B2 originates.

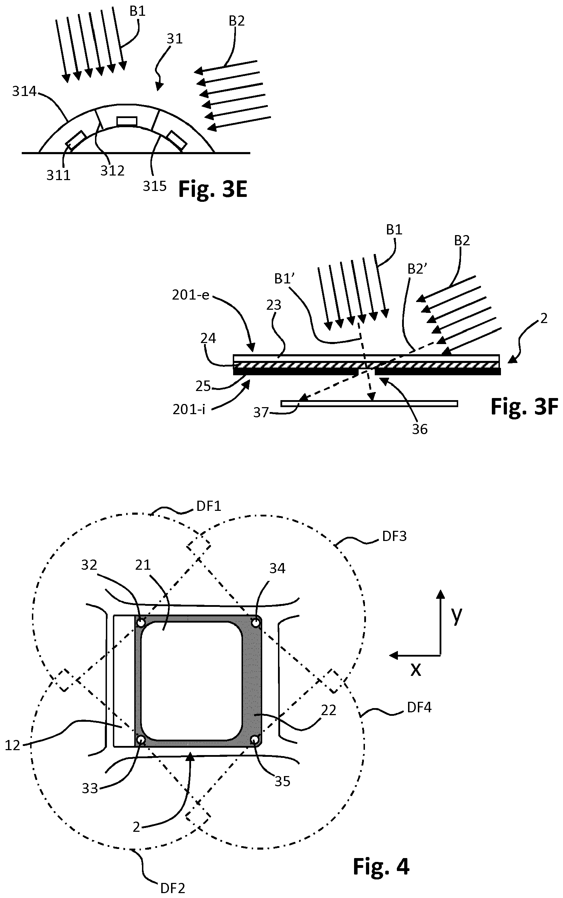

Fig. 3E shows another, fourth embodiment, wherein the light-sensitive elements 311 are mounted on a curved, dome-like substrate 315 and the top surface 314 is shaped correspondingly. Thus, the sensitivity to light rays coming from aside is increased, in particular if the top surface 314 extends above a level of the vehicle roof. In general, so for all embodiments, it is noted that positioning the sensor unit 31 at a highest location of the vehicle roof may be expected to provide the largest field of detection.

The first to fourth embodiments of the sensor unit 31 are based on similar concept of detection. The roof mountable sensor system may employ, however, any other detection concept. For example, Fig. 3F illustrates a transparent panel 2 comprising a first transparent sheet 23, a variable transmissivity sheet 24 and a light-blocking layer 25, wherein the light-blocking layer 25 may be only locally present, e.g. in the second section as illustrated in Fig. 2D.

The variable transmissivity layer 24, i.e. a dimmable layer, is a well-known kind of layer, that is operable by application of an electrical current to change its transmissivity. The dimmable layer 24 may be segmented into smaller area's that are independently operable, so that a transmissivity may be locally reduced, for example to block a direct view of the sun.

A small through hole 36 is provided in the light-blocking layer 25. As a result, a relatively small part of light from the first bundle of rays B1 shines through along line B1' or from the second bundle of rays B2 along line B2'. Thus, the hole 36 may be projected on a light sensitive array 37, e.g. a CCD or CMOS image sensor. Image processing techniques may then be applied to determine an intensity of the light and a position of the corresponding light source.

In the illustrated embodiment, the variable transmissivity layer 24 is arranged over the through hole 36. Thus, the light intensity as determined at the light sensitive array 37 is reduced by the variable transmissivity layer 24 depending on the transmissivity state of the variable transmissivity layer 24. In such embodiment, the sensor unit may be operatively coupled to a control unit (not shown) for controlling the variable transmissivity layer 24, wherein the intensity of the light coming into the passenger compartment is accurately controllable using an output of the sensor unit as a feedback signal, representing an accurate measure for the amount of light actually passing through the transparent panel 2. Further, if segmented, the variable transmissivity layer 24 may be controlled to have a locally higher or lower transmissivity depending on a detected position of a light source like the sun.

Fig. 4 illustrates a further embodiment of the roof mountable sensor system, wherein the sensor system comprises a number of sensor subunits. In the illustrated embodiment, the sensor system comprises four sensor subunits 32, 33, 34 and 35, each arranged at one of four corners of the transparent panel 2. The subunits 32, 33, 34 and 35 do not have an omnidirectional field of detection. Instead, the subunits 32, 33, 34 and 35 have a field of detection DF1, DF2, DF3, DF4, respectively, in the X-Y plane corresponding to only half of such an omnidirectional field of detection. Combining the output of each of the subunits 32, 33, 34 and 35 provides an omnidirectional detection result.

Moreover, due to a common curvature of the vehicle roof, the arrangement of the subunits 32, 33, 34 and 35 may be advantageous. The roof usually curves downward towards the sides of the vehicle. As a result, the subunits 32, 33, 34 and 35 may be tilted such to receive even light rays coming from aside, cf. Fig. 3E.

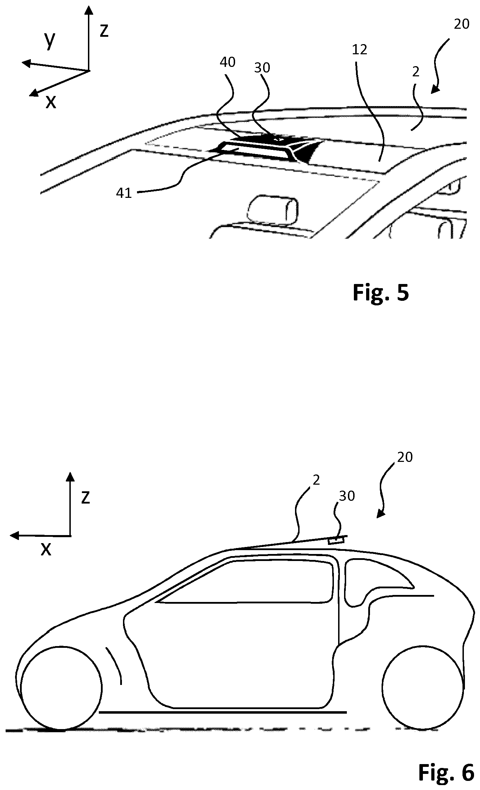

Fig. 5 illustrates further embodiment, wherein an autonomous driving function is provided by mounting of a second sensor system 40 on the roof, in this case on the front header panel 12, of the vehicle 20. For example, the second sensor system 40 may be a camera system or a LIDAR system and a transmissive panel 41 may be arranged at a front side of the second sensor system 40. Such a second sensor system 40 may be sensitive to an excessive amount of light or a locally intense light source, like the sun, in its field of detection. The sensor system 30 for detecting such light sources as a first sensor system may be arranged in a same housing as the second sensor system 40, for example. The output of the first sensor system 30 may then be used to interpret, correct, compensate or ignore an output of the second sensor unit 40.

Fig. 6 illustrates yet another embodiment, wherein the transparent panel 2 is moveably mounted on the roof of the vehicle 20. In this embodiment, the sensor system 30 is mounted on the moveably arranged panel 2. When the panel 2 is moved to an open position, for example to a tilted position as illustrated, an angle relative to the vehicle is changed. Similarly, an angle of incidence of incident light is changed. In order to compensate for such change, a control unit operatively coupled to or part of the sensor system may correct for the changed orientation and/or position. Such a correction may be based on a predetermined position and orientation or may be based on an output of a specific sensor, e.g. a gyroscopic sensor, mounted with the sensor system 30 on the moveably arranged panel 2. As apparent to those skilled in the art, other movements or changes in orientation may be compensated as well.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations are not to be regarded as a departure from the scope of the invention, and all such modifications as would be apparent to one skilled in the art are intended to be included within the scope of the following claims.

## Claims

1. A roof assembly for a vehicle (20), the roof assembly comprising a roof mountable sensor system (30) for mounting on a roof (1) of the vehicle (20), the sensor system comprising a sensor unit (31), wherein the sensor unit comprises an omnidirectional incident-light detector that detects an incident-light intensity and a light-source position relative to the vehicle, **characterized in that** the roof assembly further comprises a moveably arranged panel (2) comprising a transparent pane, wherein the sensor unit (31) is mounted at the interior surface of the moveably arranged transparent panel (2) and wherein an output of the sensor unit (31) is compensated for change in orientation of the sensor unit, when moved with the moveably arranged transparent panel (2), by a control unit operatively coupled to, or part of, the sensor system (30).

2. The roof assembly according to claim 1, wherein the correction is based on an output of a specific sensor mounted with the sensor unit (31) on the moveably arranged transparent panel (2).

3. The roof assembly according to claim 2, wherein the specific sensor is a gyroscopic sensor.

4. The roof assembly according to any of the claims 1-3, wherein the sensor system comprises a first sensor unit (31) and a second sensor unit (40), the first sensor unit comprising the omnidirectional incident-light detector and the second sensor unit being configured to detect an exterior condition, wherein an output of the second sensor unit (40) is compensated for incident light as detected by the first sensor unit (31).

5. The roof assembly according to any of the claims 1-3, wherein the sensor unit comprises a first light-sensitive subunit (32-35) and a second light-sensitive subunit (32-35), the first and the second light-sensitive subunits being spaced apart and being arranged in different orientations such as to be configured to detect incident light from different light-source positions.

6. The roof assembly according to any of the claims 1-3, wherein the sensor unit (31) is arranged at a highest location of the roof (1), when mounted on the vehicle (20).

7. The roof assembly according to any of the claims claim 1-3, wherein the moveably arranged transparent panel (2) comprises a first section (21) and a second section (22), wherein
the moveably arranged transparent panel (2) comprises an interior surface directed towards a passenger compartment of the vehicle (20) and an exterior surface opposite the interior surface;
the moveably arranged transparent panel (2) is uncovered in the first section (21) to allow exterior light to pass through the roof (1) of the vehicle into a passenger compartment of the vehicle;
the sensor unit (31) is arranged in the second section (22) at an interior surface side of the moveably arranged transparent panel (2) such that exterior light is enabled to pass through the moveably arranged transparent panel (2) and to arrive at the sensor unit (31); and
the moveably arranged transparent panel (2) is covered in the second section (22) to prevent exterior light to pass through the roof (1) of the vehicle into a passenger compartment of the vehicle.

8. The roof assembly according to claim 7, wherein the moveably arranged transparent panel (2) comprises a dimmable layer (24) and a control unit configured to control a state of the dimmable layer, wherein the sensor unit (31) is operatively coupled to the control unit and the control unit is configured to adapt the state of the dimmable layer (24) depending on an output of the sensor unit.

9. The roof assembly according to claim 7, wherein, at a location where light passes through to the sensor unit (31), the moveably arranged transparent panel (2) is provided with predetermined optical properties for adapting incident light rays to the sensor unit.

10. The roof assembly according to any of the claims 1-3, wherein the sensor unit (31) is moveably arranged, and the sensor system (30) comprises a control unit, wherein the control unit is configured to move the sensor unit.

11. A roof mountable sensor system (30) intended for use in a roof assembly for a vehicle (20) according to any of the previous claims, the sensor system comprising a sensor unit (31), wherein the sensor unit comprises an omnidirectional incident-light detector that detects an incident-light intensity and a light-source position relative to the vehicle, **characterized in that** the sensor unit (31) further is intended to be mounted at the interior surface of a moveably arranged transparent panel (2) of the roof assembly, and wherein an output of the sensor unit (31) is compensated for change in orientation of the sensor unit, when moved with the moveably arranged transparent panel (2), by a control unit operatively coupled to, or part of, the sensor system (30).

12. The sensor system according to claim 11, wherein the compensation is based on an output of a specific sensor mounted with the sensor unit (31) on the moveably arranged transparent panel (2).

13. The sensor system according to claim 12, wherein the specific sensor is a gyroscopic sensor.

## Patentansprüche

1. Dachbaugruppe für ein Fahrzeug (20), wobei die Dachbaugruppe aufweist ein Dach-anbringbares Sensorsystem (30) zum Anbringen an einem Dach (1) des Fahrzeugs (20), wobei das Sensorsystem eine Sensoreinheit (31) aufweist, wobei die Sensoreinheit einen omnidirektionalen Einfalllicht-Detektor aufweist, der eine Einfalllicht-Intensität und eine Lichtquelle-Position relativ zum Fahrzeug erfasst, **dadurch gekennzeichnet, dass** die Dachbaugruppe ferner ein bewegbar angeordnetes Paneel (2) aufweist, das eine transparente Scheibe aufweist, wobei die Sensoreinheit (31) an der Innenfläche des bewegbar angeordneten transparenten Paneels (2) angebracht ist, und wobei eine Ausgabe der Sensoreinheit (31), wenn diese mit dem bewegbar angeordneten transparenten Paneel (2) bewegt wird, bezüglich einer Änderung der Ausrichtung der Sensoreinheit kompensiert wird durch eine Steuereinheit, die mit dem Sensorsystem (30) oder einem Teil davon betriebsverbunden ist.

2. Dachbaugruppe gemäß Anspruch 1, wobei die Korrektur auf einer Ausgabe eines spezifischen Sensors basiert, der mit der Sensoreinheit (31) an dem bewegbar angeordneten transparenten Paneel (2) angebracht ist.

3. Dachbaugruppe gemäß Anspruch 2, wobei der spezifische Sensor ein gyroskopischer Sensor ist.

4. Dachbaugruppe gemäß irgendeinem der Ansprüche 1-3, wobei das Sensorsystem eine erste Sensoreinheit (31) und eine zweite Sensoreinheit (40) aufweist, wobei die erste Sensoreinheit den omnidirektionalen Einfalllicht-Sensor aufweist und die zweite Sensoreinheit konfiguriert ist, um eine Außengegebenheit zu erfassen, wobei eine Ausgabe der zweiten Sensoreinheit (40) bezüglich Einfalllicht wie von der ersten Sensoreinheit (31) erfasst kompensiert wird.

5. Dachbaugruppe gemäß irgendeinem der Ansprüche 1-3, wobei die Sensoreinheit eine erste lichtsensitive Untereinheit (32-35) und eine zweite lichtsensitive Untereinheit (32-35) aufweist, wobei die erste und die zweite lichtsensitive Untereinheit im Abstand sind und in unterschiedlichen Ausrichtungen angeordnet sind, so dass sie konfiguriert sind, um Einfalllicht von unterschiedlichen Lichtquelle-Positionen zu erfassen.

6. Dachbaugruppe gemäß irgendeinem der Ansprüche 1-3, wobei die Sensoreinheit (31), wenn an dem Fahrzeug (20) angebracht, an einer höchsten Stelle des Dachs (1) angeordnet ist.

7. Dachbaugruppe gemäß irgendeinem der Ansprüche Anspruch 1-3, wobei das bewegbar angeordnete transparente Paneel (2) einen ersten Abschnitt (21) und einen zweiten Abschnitt (22) aufweist, wobei
das bewegbar angeordnete transparente Paneel (2) aufweist eine Innenfläche, die zu einem Insassenabteil des Fahrzeugs (20) hin gerichtet ist, und eine Außenfläche, die der Innenfläche entgegengesetzt ist,
das bewegbar angeordnete transparente Paneel (2) im ersten Abschnitt (21) unbedeckt ist, um es dem Außenlicht zu ermöglichen, durch das Dach (1) des Fahrzeugs hindurch in ein Insassenabteil des Fahrzeugs zu gehen,
die Sensoreinheit (31) im zweiten Abschnitt (22) an einer Innenflächenseite des bewegbar angeordneten transparenten Paneels (2) angeordnet ist, so dass es Außenlicht ermöglicht ist, durch das bewegbar angeordnete transparente Paneel (2) hindurch zu gehen und an der Sensoreinheit (31) anzukommen, und
das bewegbar angeordnete transparente Paneel (2) im zweiten Abschnitt (22) bedeckt ist, um Außenlicht daran zu hindern, durch das Dach (1) des Fahrzeugs hindurch in ein Insassenabteil des Fahrzeugs zu gehen.

8. Dachbaugruppe gemäß Anspruch 7, wobei das bewegbar angeordnete transparente Paneel (2) eine dimmbare Schicht (24) aufweist und eine Steuereinheit konfiguriert ist, um einen Zustand der dimmbaren Schicht zu steuern, wobei die Sensoreinheit (31) mit der Steuereinheit betriebsverbunden ist und die Steuereinheit konfiguriert ist, um den Zustand der dimmbaren Schicht (24) abhängig von einer Ausgabe der Sensoreinheit anzupassen.

9. Dachbaugruppe gemäß Anspruch 7, wobei das bewegbar angeordnete transparente Paneel (2) an einer Stelle, wo Licht durch die Sensoreinheit (31) hindurchgeht, mit vorbestimmten optischen Eigenschaften versehen ist zum Anpassen von Einfalllichtstrahlen an die Sensoreinheit.

10. Dachbaugruppe gemäß irgendeinem der Ansprüche 1-3,
wobei die Sensoreinheit (31) bewegbar angeordnet ist, und
wobei das Sensorsystem (30) eine Steuereinheit aufweist, wobei die Steuereinheit konfiguriert ist, um die Sensoreinheit zu bewegen.

11. Dach-anbringbares Sensorsystem (30), das vorgesehen ist zur Verwendung in einer Dachbaugruppe für ein Fahrzeug (20) gemäß irgendeinem der vorigen Ansprüche, wobei das Sensorsystem eine Sensoreinheit (31) aufweist, wobei die Sensoreinheit einen omnidirektionalen Einfalllicht-Detektor aufweist, der eine Einfalllicht-Intensität und eine Lichtquelle-Position relativ zu dem Fahrzeug erfasst, **dadurch gekennzeichnet, dass** die Sensoreinheit (31) ferner vorgesehen ist, um an der Innenfläche eines bewegbar angeordneten transparenten Paneels (2) der Dachbaugruppe angebracht zu werden, und wobei eine Ausgabe der Sensoreinheit (31), wenn diese mit dem bewegbar angeordneten transparenten Paneel (2) bewegt wird, bezüglich der Ausrichtung der Sensoreinheit kompensiert wird durch eine Steuereinheit, die mit dem Sensorsystem (30) oder einem Teil davon betriebsverbunden ist.

12. Sensorsystem gemäß Anspruch 11, wobei die Kompensation auf einer Ausgabe eines spezifischen Sensors basiert, der mit der Sensoreinheit (31) an dem bewegbar angeordneten transparenten Paneel (2) angebracht ist.

13. Sensorsystem gemäß Anspruch 12, wobei der spezifische Sensor ein gyroskopischer Sensor ist.

## Revendications

1. Ensemble de toit pour un véhicule (20), l'ensemble de toit comprenant un système de capteur (30) pouvant être monté sur un toit destiné à être monté sur un toit (1) du véhicule (20), le système de capteur comprenant une unité capteur (31), dans lequel l'unité capteur comprend un détecteur de lumière incidente omnidirectionnel qui détecte une intensité de lumière incidente et une position de source lumineuse par rapport au véhicule, **caractérisé en ce que** l'ensemble de toit comprend en outre un panneau disposé de manière mobile (2) comprenant une vitre transparente, dans lequel l'unité capteur (31) est montée au niveau de la surface intérieure du panneau transparent disposé de manière mobile (2) et dans lequel une sortie de l'unité capteur (31) est compensée concernant un changement d'orientation de l'unité capteur, lorsqu'elle est déplacée avec le panneau transparent disposé de manière mobile (2), par une unité de commande couplée de manière opérationnelle au système de capteur (30), ou à une partie de celui-ci.

2. Ensemble de toit selon la revendication 1, dans lequel la correction est basée sur une sortie d'un capteur spécifique monté avec l'unité capteur (31) sur le panneau transparent disposé de manière mobile (2).

3. Ensemble de toit selon la revendication 2, dans lequel le capteur spécifique est un capteur gyroscopique.

4. Ensemble de toit selon l'une quelconque des revendications 1 à 3, dans lequel le système capteur comprend une première unité capteur (31) et une seconde unité capteur (40), la première unité capteur comprenant le détecteur de lumière incidente omnidirectionnel et la seconde unité capteur étant configurée pour détecter une condition extérieure, dans lequel une sortie de la seconde unité capteur (40) est compensée concernant une lumière incidente telle que détectée par la première unité capteur (31) .

5. Ensemble de toit selon l'une quelconque des revendications 1 à 3, dans lequel l'unité capteur comprend une première sous-unité photosensible (32-35) et une seconde sous-unité photosensible (32-35), les première et seconde sous-unités photosensibles étant espacées et étant disposées dans des orientations différentes de manière à être configurées pour détecter une lumière incidente provenant de différentes positions de source lumineuse.

6. Ensemble de toit selon l'une quelconque des revendications 1 à 3, dans lequel l'unité capteur (31) est disposée à un emplacement le plus élevé du toit (1), lorsqu'elle est montée sur le véhicule (20).

7. Ensemble de toit selon l'une quelconque des revendications 1 à 3, dans lequel le panneau transparent disposé de manière mobile (2) comprend une première section (21) et une seconde section (22), dans lequel
le panneau transparent disposé de manière mobile (2) comprend une surface intérieure dirigée vers un habitacle du véhicule (20) et une surface extérieure opposée à la surface intérieure ;
le panneau transparent disposé de manière mobile (2) est découvert dans la première section (21) pour permettre à de la lumière extérieure de passer à travers le toit (1) du véhicule dans un habitacle du véhicule ;
l'unité capteur (31) est disposée dans la seconde section (22) au niveau d'un côté surface intérieure du panneau transparent disposé de manière mobile (2) de telle sorte que de la lumière extérieure peut passer à travers le panneau transparent disposé de manière mobile (2) et arriver au niveau de l'unité capteur (31) ; et
le panneau transparent disposé de manière mobile (2) est recouvert dans la seconde section (22) pour empêcher de la lumière extérieure de passer à travers le toit (1) du véhicule dans un habitacle du véhicule.

8. Ensemble de toit selon la revendication 7, dans lequel le panneau transparent disposé de manière mobile (2) comprend une couche gradable (24) et une unité de commande configurée pour commander un état de la couche gradable, dans lequel l'unité capteur (31) est couplée de manière opérationnelle à l'unité de commande et l'unité de commande est configurée pour adapter l'état de la couche gradable (24) en fonction d'une sortie de l'unité capteur.

9. Ensemble de toit selon la revendication 7, dans lequel, à un emplacement où de la lumière passe à travers l'unité capteur (31), le panneau transparent disposé de manière mobile (2) est doté de propriétés optiques prédéterminées pour adapter des rayons lumineux incidents à l'unité capteur.

10. Ensemble de toit selon l'une quelconque des revendications 1 à 3, dans lequel l'unité capteur (31) est disposée de manière mobile, et le système de capteur (30) comprend une unité de commande, dans lequel l'unité de commande est configurée pour déplacer l'unité capteur.

11. Système de capteur (30) pouvant être monté sur un toit, destiné à être utilisé dans un ensemble de toit pour un véhicule (20) selon l'une quelconque des revendications précédentes, le système de capteur comprenant une unité capteur (31), dans lequel l'unité capteur comprend un détecteur de lumière incidente omnidirectionnel qui détecte une intensité de lumière incidente et une position de source lumineuse par rapport au véhicule, **caractérisé en ce que** l'unité capteur (31) est en outre destinée à être montée au niveau de la surface intérieure d'un panneau transparent disposé de manière mobile (2) de l'ensemble de toit, et dans lequel une sortie de l'unité capteur (31) est compensée concernant un changement d'orientation de l'unité de capteur, lorsqu'elle est déplacée avec le panneau transparent disposé de manière mobile (2), par une unité de commande couplée de manière opérationnelle au système de capteur (30), ou à une partie de celui-ci.

12. Système de capteur selon la revendication 11, dans lequel la compensation est basée sur une sortie d'un capteur spécifique monté avec l'unité capteur (31) sur le panneau transparent disposé de manière mobile (2).

13. Système de capteur selon la revendication 12, dans lequel le capteur spécifique est un capteur gyroscopique.
